# FASCICULE DE BREVET EUROPEEN

(11) **EP 0 611 199 B1**
(45) Date de publication et mention de la délivrance du brevet: **28.10.1998**
(21) Numéro de dépôt: 94400253.4
(22) Date de dépôt: 07.02.1994
(51) Int. Cl.: H04B 1/38, H01Q 1/24

(54) **Radio émetteur-récepteur portable comportant une antenne ayant un diagramme de rayonnement pratiquement vertical**
Tragbares Funkgerät mit einem nahezu vertikalen Antennenanstrahlungsdiagramm
Portable radio telephone employing an antenna with a substantially vertical radiation pattern

(30) Priorité: 11.02.1993 FR 9301532
(43) Date de publication de la demande: 17.08.1994
(73) Titulaire: ALCATEL ALSTHOM COMPAGNIE GENERALE D'ELECTRICITE, 75008 Paris (FR)
(72) Inventeur: Auvray, Gerard, F-95870 Bezons (FR)
(74) Mandataire: Pothet, Jean Rémy Emile Ludovic

(56) Documents cités:
- EP-A- 0 415 703
- EP-A- 0 590 671
- WO-A-93/09577
- GB-A- 2 240 219
- US-A- 4 041 497
- TRANSACTIONS OF THE INSTITUTE OF ELECTRONICS, INFORMATION AND COMMUNICATION ENGINEERS OF JAPAN, vol.E74, no.6, Juin 1991, TOKYO JP pages 1547 - 1555 YAMADA ET AL. 'Base and Mobile Station Antennas for Land Mobile Radio Stations.'
- IEEE International Conference on Communications. Boston US, 11-14 June 1989 Vol. 1, Pages 216-220. Estabrook et al. "A 20/30GHz Personal Access Satellite

## Description

La présente invention concerne un appareil émetteur-récepteur radiotéléphonique portatif, notamment pour la communication en liaison directe avec une station relais portée par un satellite, cet appareil comportant un boîtier muni d'un microphone et d'un écouteur, et une antenne montée sur ce boîtier.

Un tel appareil émetteur-récepteur radiotéléphonique est décrit dans le document TRANSACTIONS OF THE INSTITUTE OF ELECTRONICS, INFORMATION AND COMMUNICATION ENGINEERS OF JAPAN, vol. E74, no. 6, juin 1991, TOKYO JP, pages 1547 à 1555, Yamada et al.: 'Base and Mobile Station Antennas for Land Mobile Radio Stations'.

Le boîtier d'un tel appareil a généralement une forme allongée et possède un agencement similaire à celui des terminaux portatifs utilisés dans les réseaux de radiotéléphonie à station terrestre. Le boîtier est principalement destiné à être utilisé en étant tenu à la main dans une position où l'écouteur est placé près de l'une des oreilles de l'utilisateur et le microphone près de la bouche de celui-ci. Dans certaines formes d'exécution, le boîtier peut aussi être placé sur un support, permettant ainsi l'utilisation de l'appareil à mains libres.

L'antenne des appareils usuels est une antenne allongée du type fouet ou télescopique, montée fixement sur le boîtier, de manière à faire saillie dans le prolongement du boîtier dans la direction longitudinale de celui-ci.

Dans le cas de terminaux portatifs destinés à travailler en liaison directe avec un satellite, les niveaux de champ électromagnétique sont relativement faibles, et il s'est avéré qu'un agencement de ces appareils, similaire à ceux utilisés dans les réseaux de téléphonie à station terrestre, n'était pas satisfaisant.

L'invention a pour but de fournir un appareil émetteur-récepteur radiotéléphonique du type mentionné au début, permettant une amélioration sensible des conditions d'émission et de réception. A cet égard, il a été trouvé que le diagramme de rayonnement de l'antenne pouvait être optimisé, en particulier par un déplacement géométrique de ce diagramme par rapport à celui résultant de l'agencement habituel.

L'invention vise en outre à fournir un tel appareil, dont le boîtier peut être utilisé de la main gauche comme de la main droite ainsi que, le cas échéant, monté sur un support de bureau.

L'appareil selon l'invention comprend les caractéristiques de la revendication 1.

Le support d'antenne peut en outre présenter une troisième position de verrouillage correspondant à une orientation de l'antenne dans laquelle la direction principale de rayonnement est parallèle à la direction longitudinale du boîtier, permettant ainsi l'utilisation du même boîtier sur un support de bureau.

L'invention sera mieux comprise à la lumière de la description détaillée donnée ci-après, d'un exemple d'exécution de l'appareil, avec référence aux dessins annexés, dans lesquels:
La Fig. 1 est un croquis illustrant la position d'utilisation du boîtier de l'appareil selon l'invention et le diagramme de rayonnement optimisé de l'antenne; et
La Fig. 2 est une vue schématique du boîtier d'un appareil selon l'invention.

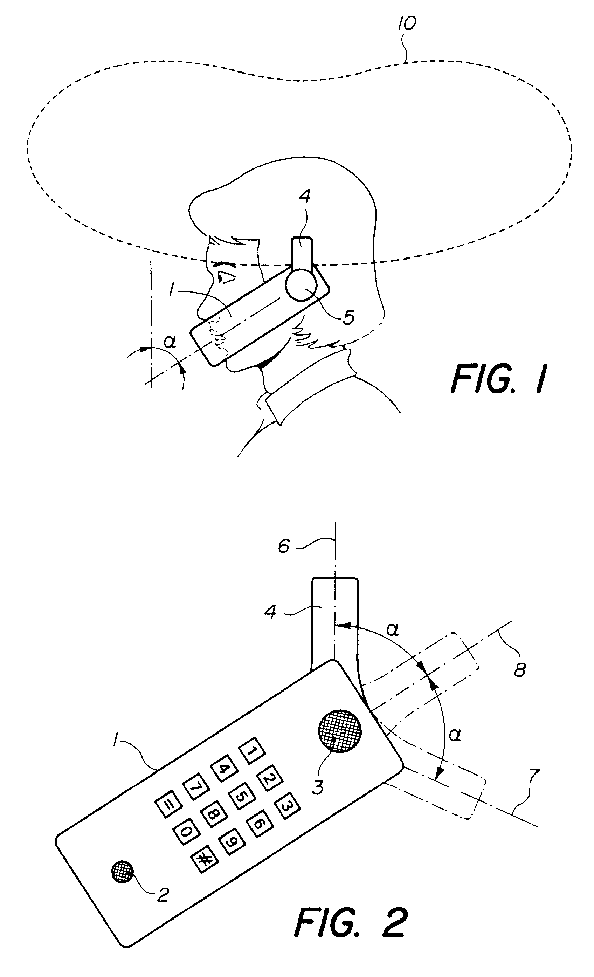

Comme on le voit à la Fig. 1, lorsque l'on tient à la main, en position d'utilisation, un boîtier allongé 1 muni d'un microphone 2 et d'un écouteur 3, visibles à la Fig. 2, de façon que l'écouteur soit placé près de l'oreille et le microphone près de la bouche, la direction longitudinale du boîtier fait, avec la verticale, un certain angle α. Cet angle est déterminé par les positions relatives de l'oreille et de la bouche de l'utilisateur, lorsque celui-ci tient sa tête droite. Or, on constate que cet angle est pratiquement constant d'un utilisateur à l'autre.

Dans le présent appareil, le boîtier est muni d'une antenne allongée 4, inclinée par rapport à la direction longitudinale du boîtier, d'un angle sensiblement égal à α, de sorte que l'antenne sera orientée verticalement lorsque le boîtier est tenu dans la position d'utilisation normale. Le diagramme de rayonnement de l'antenne, illustré de manière schématique par la ligne 10 de la Fig. 1, devient alors optimal, la direction principale de rayonnement de l'antenne étant pratiquement verticale.

L'antenne 4 est solidaire d'un support pivotant 5. Dans une forme d'exécution, représentée schématiquement à la Fig. 2, l'antenne 4 peut pivoter par rapport au boîtier 1, le support pivotant présentant une position de verrouillage 6 dans laquelle l'antenne est orientée verticalement lorsque le boîtier est tenu en position d'utilisation de la main droite. Le support pivotant présente une deuxième position de verrouillage 7, dans laquelle l'antenne 4, représentée en traits pointillés sur la Fig. 2, est orientée verticalement lorsque l'appareil est tenu de la main gauche.

Enfin, une troisième position de verrouillage 8 peut être prévue pour placer l'antenne parallèlement à la direction longitudinale du boîtier pour le cas où celui-ci est destiné à être utilisé sur un support de bureau.

Bien que l'anntenne 4 ait été représentée, à titre d'exemple, sous forme d'une antenne du type allongé, auquel appartiennent entre autres les antennes du type filaire, elle peut également avoir d'autres formes, par exemple être de structure plane ou être réalisée sous forme d'une antenne à cavité rayonnante.

Dans tous ces cas, l'invention prévoit une orientation de l'antenne en position d'utilisation telle que la direction principale de rayonnement soit pratiquement verticale.

## Revendications

1. Appareil émetteur-récepteur radiotéléphonique portatif notamment pour la communication en liaison directe avec une station relais portée par un satellite, cet appareil comportant un boîtier (1) muni d'un microphone (2) et d'un écouteur (3), et une antenne (4) montée sur ce boîtier, cet appareil étant agencé de façon que la direction principale de rayonnement de l'antenne (4) soit pratiquement verticale lorsque le boîtier (1) se trouve dans une position d'utilisation dans laquelle il est tenu à la main, près de la tête de l'utilisateur, caractérisé en ce que le boîtier (1) est muni d'un support d'antenne pivotant (5), présentant au moins une première (6) et une deuxième (7) positions de verrouillage, lesdites première et deuxième positions de verrouillage correspondant, respectivement, à deux orientations de l'antenne symétriques par rapport à la direction longitudinale du boîtier, et ainsi, à des positions d'utilisation dans lesquelles le boîtier est tenu, respectivement, de la main droite ou de la main gauche.

2. Appareil selon la revendication 1, caractérisé en ce que le support d'antenne (5) présente une troisième position de verrouillage (8) correspondant à une orientation de l'antenne dans laquelle la direction principale de rayonnement est parallèle à la direction longitudinale du boîtier.

## Patentansprüche

1. Tragbares Funkgerät, insbesondere für die Kommunikation in direkter Verbindung mit einer von einem Satelliten getragenen Relaisstation, wobei das Gerät ein Gehäuse (1) mit einem Mikrophon (2) und einem Hörer (3) und eine an diesem Gehäuse montierte Antenne (4) umfaßt, wobei das Gerät derart eingerichtet ist, daß die Hauptstrahlungsrichtung der Antenne (4) praktisch vertikal ist, wenn das Gehäuse (1) sich in einer Gebrauchsposition befindet, in der es in der Hand in der Nähe des Kopfes des Benutzers gehalten wird, **dadurch gekennzeichnet,** daß das Gehäuse (1) mit einem schwenkbaren Antennenträger (5) versehen ist, der wenigstens eine erste (6) und zweite (7) Verriegelungsposition aufweist, wobei die erste und zweite Verriegelungsposition jeweils zwei in Bezug auf die Längsachse des Gehäuses symmetrischen Orientierungen der Antenne und somit Gebrauchspositionen entsprechen, in denen das Gehäuse in der rechten bzw. der linken Hand gehalten wird.

2. Gerät nach Anspruch 1, dadurch gekennzeichnet, daß der Antennenträger (5) eine dritte Verriegelungsposition (8) aufweist, die einer Orientierung der Antenne entspricht, in der die Hauptstrahlungsrichtung parallel zur Längsrichtung des Gehäuses ist.

## Claims

1. Portable mobile radio transceiver for direct communication with a radio relay station on a satellite, the transceiver including a casing (1) with a microphone (2) and an earpiece (3) and an antenna (4) mounted on said casing, the transceiver being such that the main direction of radiation of the antenna (4) is substantially vertical when the casing (1) is in a position of use in which it is held in the hand near the head of the user, characterised in that the casing (1) is provided with a pivoting antenna support (5) having at least a first locking position (6) and a second locking position (7), said first and second locking positions respectively corresponding to two symmetrical orientations of the antenna relative to the longitudinal direction of the casing and thus two positions of use in which the casing is respectively held in the right hand or the left hand.

2. Transceiver according to claim 1 wherein the antenna support (5) has a third locking position (8) corresponding to an orientation of the antenna in which the main direction of radiation is parallel to the longitudinal direction of the casing.
